# EUROPÄISCHE PATENTSCHRIFT

(11) **EP 2 302 559 B1**
(45) Veröffentlichungstag und Bekanntmachung des Hinweises auf die Patenterteilung: **15.01.2014**
(21) Anmeldenummer: 10189936.7
(22) Anmeldetag: 06.11.2006
(51) Int. Cl.: G06K 7/10, G06K 7/00

(54) **Rauscharme Sendevorrichtung mit hohem Wirkungsgrad und variablem Modulationsgrad für eine Schreib-/Lesestation eines RFID-Systems**
Emitting device with low noise, high efficiency and variable power for RFID reader/writer
Emetteur à faible bruit avec haut degré d'action et puissance variable pour lecteur/enregistreur RFID

(30) Priorität: 09.12.2005 DE 102005059348
(43) Veröffentlichungstag der Anmeldung: 30.03.2011
(62) Teilanmeldung aus: 06123552.9
(73) Patentinhaber: Feig Electronic GmbH, 35781 Weilburg-Waldhausen (DE)
(72) Erfinder: Reichwein, Dipl.-Ing. Elmar, 65599, Dornburg-Wilsenroth (DE); Bernard, Ludger, 65606, Villmar (DE)
(74) Vertreter: Knefel, Cordula

(56) Entgegenhaltungen:
- US-A- 5 905 372
- US-A1- 2003 071 731

## Beschreibung

Die Erfindung betrifft eine Sendevorrichtung mit hohem Wirkungsgrad und variablem Modulationsgrad für eine Schreib-/Lesestation eines RFID-Systems.

Diese Sendevorrichtung dient zur Kommunikation mit passiven RFID-Transpondern über möglichst große Entfernungen, beispielsweise im Bereich von bis zu zwei Metern.

Die Sendevorrichtung einer Schreib-/Lesestation hat die Aufgabe, die elektrische Leistung zur Verfügung zu stellen, die über die an die Schreib-/Lesestation angeschlossene Antenne, die eine kombinierte Sende-/Empfangsantenne ist, abgegeben werden soll. Das von der Sendevorrichtung erzeugte elektrische Signal ist dabei eine Wechselspannung oder ein Wechselstrom mit einer Frequenz von beispielsweise 125 kHz oder 13,56 MHz oder einer anderen Frequenz. Das abgegebene elektrische Signal dient gleichzeitig dazu, den oder die passiven Transponder innerhalb des Antennenfeldes berührungslos mit elektrischer Energie zu versorgen, und es dient als Trägerfrequenz für die bidirektionale Datenübertragung zwischen Transponder und Schreib-/Lesestation. Zur Datenübertragung von der Schreib-/Lesestation zu dem oder den Transpondern wird die Trägerfrequenz mit den zu sendenden Daten in ihrer Amplitude moduliert, wobei der Grad der Modulation in Abhängigkeit der Transponiertechnologie oder der Anwendung unterschiedlich groß sein kann und beispielsweise im internationalen Standard ISO/IEC 15693 wahlweise mit einem Grad von 100 % oder einem Grad von 10 % bis 30 % angegeben ist.

Die Datenübertragung zwischen Schreib-/Lesestation und Transponder erfolgt hierbei im Halbduplex-Verfahren. Dies bedeutet, dass die Schreib-/Lesestation und der oder die Transponder dieselbe Übertragungsstrecke zur Datenübertragung nutzen, und dass die Datenübertragung von der Schreib-/Lesestation zu dem oder den Transpondern nicht gleichzeitig mit einer Datenübertragung von einem Transponder zur Schreib-/Lesestation stattfinden kann.

Damit die Schreib-/Lesestation eines RFID-Systems die Rückantwort eines weit entfernten Transponders sicher empfangen kann, muss der Empfänger der Schreib-/Lesestation eine sehr hohe Empfindlichkeit aufweisen und in der Lage sein, noch sehr schwache Signale als Rückantwort eines Transponders zu erkennen.

Bei anderen üblichen Funksystemen wird auf eine Trägerfrequenz die zu übertragende Information aufmoduliert. Die durch die Information modulierte Trägerfrequenz wird von einem Sender ausgesendet. Ein Empfänger, der meist weit von dem Sender entfernt ist, empfängt die mit der Information modulierte Trägerfrequenz und demoduliert daraus wieder die Information. Entscheidend ist hierbei, dass der Empfänger eine Empfindlichkeit aufweist, die es ermöglicht, die modulierte Information aus dem empfangenen Signal zu demodulieren. Die Signalstärke der empfangenen Trägerfrequenz ist dabei meist ähnlich groß wie die Signalstärke der aufmodulierten Informationen.

Das Sender-/Empfänger-System einer Schreib-/Lesestation eines RFID-Systems weist gegenüber anderen Funksystemen einen deutlichen Unterschied auf, da der Sender und Empfänger eine gerätetechnische Einheit bilden und der Sender eine hohe Energie aussenden muss, um die passiven Transponder in einem entsprechend großen Abstand von der Schreib-/Lesestation mit elektrischer Energie versorgen zu können, die Transponder bei ihrer Rückantwort aber nur ein verhältnismäßig schwaches Signal auf die von der Schreib-/Lesestation ausgesendete Trägerfrequenz aufmodulieren können. Um dieses schwache Rückantwortsignal empfangen zu können, benötigt der Empfänger der Schreib-/Lesestation eine sehr hohe Empfindlichkeit. Gleichzeitig empfängt der Empfänger jedoch auch das verhältnismäßig starke Sendesignal der Schreib-/Lesestation, welches mit hoher Energie in dem Empfänger einwirkt.

Dadurch, dass die Schreib-/Lesestation ihr eigenes Sendesignal mit hoher Signalstärke empfängt, kann das schaltungs-, bauteil- und temperaturbedingte Rauschen des Senders eine so hohe Amplitude aufweisen, dass das schwache Rückantwortsignal eines Transponders vom Rauschen des Senders überdeckt wird, so dass der Empfänger der Schreib-/Lesestation keine Transponder-Rückantwortdaten mehr demodulieren kann.

Wie bereits beschrieben, benötigt eine Schreib-/Lesestation zur Kommunikation mit einem Transponder über größere Reichweiten einen Sender mit hoher Leistung. Typischerweise besitzt ein solcher Sender eine Sendeleistung von mehr als einem Watt. Die Sendeleistung wird in der Sendeendstufe des Senders erzeugt, die aus wenigstens einem Transistor aufgebaut ist. Abhängig vom Wirkungsgrad der Sendeendstufe und der Sendeleistung entsteht in der Sendeendstufe Verlustleistung in Form von Wärme. Der Wirkungsgrad gibt hierbei das Verhältnis der zugeführten elektrischen Leistung zur abgegebenen Sendeleistung an. Je schlechter der Wirkungsgrad der Sendeendstufe ist, umso mehr Verlustleistung muss in Form von Wärme abgeführt werden, was aufwändige und teure Maßnahmen zur Kühlung notwendig macht. Ferner muss bei einem schlechten Wirkungsgrad mehr elektrische Energie zugeführt werden, was wiederum mit einem erhöhten Bauteil- und Energieaufwand verbunden ist.

Ferner sollte eine Schreib-/Lesestation in der Lage sein, den Modulationsgrad, also das Verhältnis der unmodulierten Amplitude zur modulierten Amplitude des Sendesignals zu variieren, damit sie an die Erfordernisse unterschiedlicher Transponder-Technologien ohne Änderungen der Hardware angepasst werden kann.

Um einen guten Wirkungsgrad der Sendeendstufe einer Schreib-/Lesestation zu erzielen, bietet sich der Einsatz einer so genannten E-Endstufe an, wie sie beispielsweise in der US 3,919,656 A beschrieben und auch bereits gemäß US 6,737,973 B2 als Stand der Technik in Schreib-/Lesestationen eines RFID-Systems bekannt sind.

Die zum Stand der Technik (US 6,737,973 B2) gehörende Sendevorrichtung der in dieser Druckschrift beschriebenen Schreib-/Lesestation hat jedoch den Nachteil, dass der Modulationsgrad nicht frei gewählt werden kann, da er über die Dimensionierung und Anordnung der verwendeten Bauteile fest vorgegeben ist. Ferner ist für jeden weiteren gewünschten Modulationsgrad ein weiterer Transistor, ein weiterer Widerstand und eine weitere Ansteuerung des Transistors notwendig. Ein Modulationsgrad von 100 % wird in dieser Druckschrift beispielsweise über den Transistor (39) erzielt, während mit dem Transistor (60) und dem Widerstand (58) ein Modulationsgrad von 10 % generiert werden kann. Um beispielsweise zusätzlich einen Modulationsgrad von 20 % generieren zu können, müsste parallel zu dem Transistor (60) und dem Widerstand (58) eine weitere zusätzliche Parallelschaltung aus Transistor und Widerstand angeordnet werden. Ferner ist es in dieser Druckschrift nicht vorgesehen, die Sendeleistung der Sendevorrichtung variabel zu gestalten.

Darüber hinaus gehört zum Stand der Technik (US 5,905,372 A) ein Verfahren, bei dem eine Schreib-/Lesestation je nach Energiebedarf des Transponders seine Ausgangsleistung und/oder seine Datenrate und/oder seine Modulationstiefe so variiert ,dass sein Modulationsspektrum innerhalb der Zulassungsgrenzen bleibt und der Transponder jeweils mit ausreichender Energie versorgt wird.

Davon ausgehend liegt der Erfindung das technische Problem zugrunde, eine besonders rauscharme Sendevorrichtung mit hohem Wirkungsgrad und variablem Modulationsgrad für eine Schreib-/Lesestation eines RFID-Systems anzugeben.

Gelöst wird dieses Problem durch eine rauscharme Sendevorrichtung mit hohem Wirkungsgrad und variablem Modulationsgrad für eine Schreib-/Lesestation eines RFID-Systems bestehend aus einer Sendeendstufe, die als E-Endstufe aufgebaut ist, und einer Ansteuervorrichtung der Sendeendstufe, bei der
- eine Modulation des Sendesignals durch Modulieren einer Treiberausgangsspannung durchführbar ist,
- eine Treibervorrichtung als eine von zwei separaten Gleichspannungsquellen gespeiste Treibervorrichtung ausgebildet ist,
- die Treibervorrichtung zwei parallel geschaltete, abwechselnd betriebene Treiber aufweist, die mit je einer eigenen Gleichspannung (Treiberversorgungsspannung und Modulatorversorgungsspannung) versorgbar sind,
- die Modulation der Treiberausgangsspannung durch Umschaltung zwischen der Treiberversorgungsspannung und einer Modulationsversorgungsspannung durchführbar ist, und bei der
- der erste Treiber als ein die Treiberausgangsspannung für das unmodulierte Sendesignal erzeugender Treiber ausgebildet ist, während ein zweiter Treiber als ein die Treiberausgangsspannung für das modulierte Sendesignal erzeugender Treiber ausgebildet ist, wobei der zweite Treiber als ein von der variablen Modulationsversorgungsspannung versorgter Treiber ausgebildet ist, und dass der zweite Treiber in der Zeitspanne, in der das Sendesignal ein moduliertes Signal ist, als ein die Treiberausgangsspannung erzeugender Treiber ausgebildet ist.

Die erfindungsgemäße Sendevorrichtung hat den Vorteil, dass sie aus sehr wenigen Komponenten aufgebaut ist, und dass sie damit sehr preiswert ist.

Erfindungsgemäß ist eine Modulation durch Modulieren einer Treiberausgangsspannung durchführbar. Dabei ist vorteilhaft ein Endstufentransistor von einer Treiberausgangsspannung mit variabler Amplitude ansteuerbar, wobei die Amplitude der Treiberausgangsspannung derart variierbar ist, dass zum Senden des unmodulierten Sendesignals der Endstufentransistor vollständig durchsteuerbar ist, während die Treiberausgangsspannung zum Senden des modulierten Sendesignals eine geringere Amplitude aufweist, derart, dass der Endstufentransistor durch die geringere Amplitude nicht mehr vollständig durchgesteuert ist. Der Vorteil liegt hierbei darin, dass die Bauteile, die zur Ansteuerung des Endstufentransistors notwendig sind, nur eine kleine Leistung schalten müssen und preiswert sind.

Vorzugsweise ist die Modulation der Treiberausgangsspannung durch Variieren der Treiberversorgungsspannung oder durch Umschaltung zwischen der Treiberversorgungsspannung und einer Modulationsversorgungsspannung durchführbar. Die Modulation der Treiberausgangsspannung kann auf diese Art und Weise sehr einfach durchgeführt werden.

Weitere Merkmale und Vorteile der Erfindung ergeben sich anhand der zugehörigen Zeichnung, in der mehrere Ausführungsbeispiele einer erfindungsgemäßen Sendevorrichtung nur beispielhaft dargestellt sind. In der Zeichnung zeigen:
- Fig. 1: ein Blockschaltbild einer nicht beanspruchten Ausführungsform der erfindungsgemäßen Sendevorrichtung;
- Fig. 2: das Prinzipschaltbild einer Ausführungsform der erfindungsgemäßen Sendeendstufe ohne Tiefpassfilter und Impedanztransformator;
- Fig. 3: ein Blockschaltbild einer Ausführungsform der erfindungsgemäßen Sendevorrichtung;
- Fig. 4: ein Prinzipschaltbild der erfindungsgemäßen Ansteuervorrichtung.

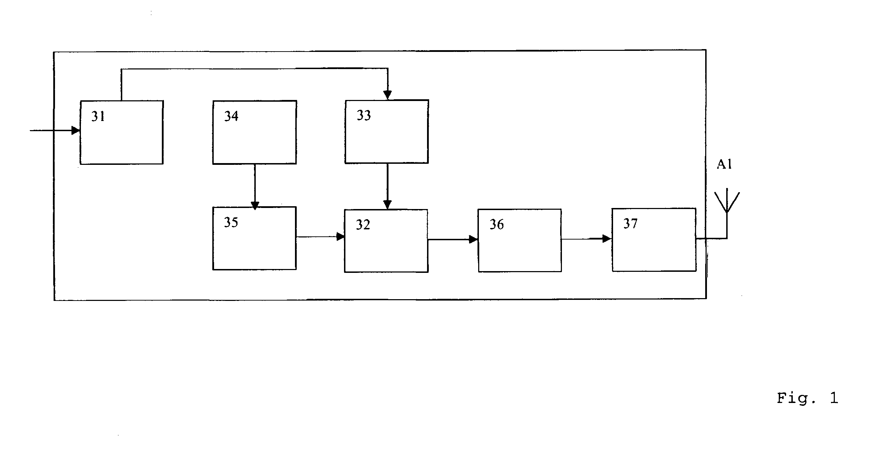

Anhand einer in Fig. 1 dargestellten nicht beanspruchten Ausführungsform der erfindungsgemäßen Sendevorrichtung wird das Funktionsprinzip der Sendevorrichtung beschrieben.

In dieser Ausführungsform besteht die Sendevorrichtung aus den Komponenten
- Steuervorrichtung 31, über die die zu sendenden Daten ausgegeben werden,
- Sendeendstufe 32, die als E-Endstufe ausgebildet ist,
- Senderversorgungsspannungsquelle 33, die dazu dient, die elektrische Gleichspannung für die Sendeendstufe 32 zur Verfügung zu stellen,
- Treibervorrichtung 35, über die die Sendeendstufe 32 angesteuert wird,
- Treiberversorgungsspannungsquelle 34, über die die Treibervorrichtung 35 mit elektrischer Gleichspannung versorgt wird,
- Impedanztransformator 36 zur Anpassung der Impedanz der Sendeendstufe an die angeschlossene Antenne und
- Tiefpassfilter 37 zur Filterung etwaiger Oberwellen und Frequenzen und unerwünschter Frequenzen.

Die Antenne A1, die eine Sendeantenne oder eine kombinierte Sende-/Empfangsantenne sein kann, ist an das Tiefpassfilter 37 angeschlossen.

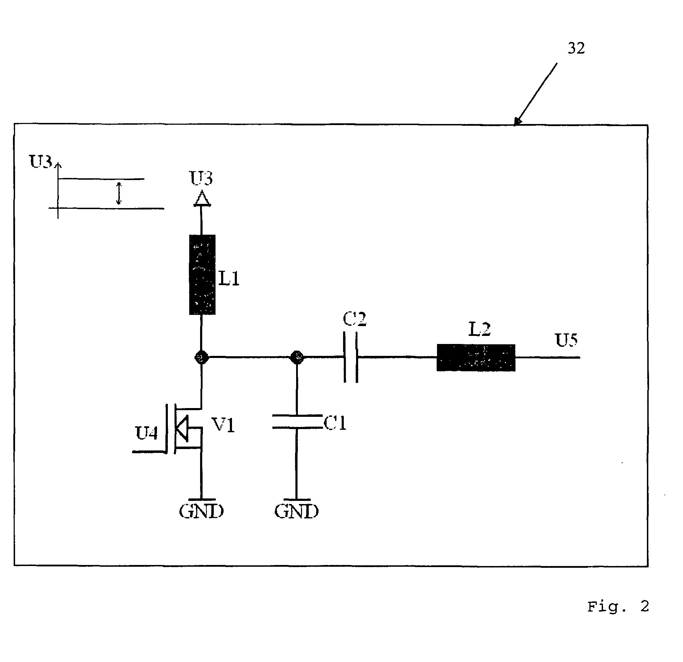

Die Sendeendstufe 32 weist dabei die wesentlichen Merkmale einer so genannten E-Endstufe auf und wird in Fig. 2 detaillierter dargestellt. Der Einsatz einer E-Endstufe in der Sendevorrichtung einer Schreib-/Lesestation ist besonders vorteilhaft, weil sie aus sehr wenigen Komponenten und damit preiswert aufgebaut werden kann und einen hohen Wirkungsgrad besitzt, da ein Endstufentransistor V1 im Schalterbetrieb betrieben wird und weil sie sehr rauscharm ist.

Neben dem Endstufentransistor V1, der als Feld-Effekt-Transistor (FET) oder Bipolartransistor ausgeführt werden kann, besteht die Sendeendstufe 32 aus den Komponenten Induktivität L1 und einem Anpassnetzwerk, bestehend aus den Kapazitäten C1 und C2 und einer Induktivität L2. Über eine Treiberausgangspannung U4 wird der Endstufentransistor V1 angesteuert, wobei die Treiberausgangspannung U4 eine Wechselspannung oder eine gepulste Gleichspannung ist und der Sendevorrichtung die Sendefrequenz der Schreib-/Lesestation von beispielsweise 13,56 MHz aufprägt.

Damit die erfindungsgemäße Sendevorrichtung einen insgesamt hohen Wirkungsgrad erreicht, ist es besonders vorteilhaft, auch die Spannungsquellen der Senderversorgungsspannungsquelle 33 so aufzubauen, dass diese einen hohen Wirkungsgrad erzielt, was beispielsweise durch den Einsatz verlustarmer Schaltregler oder Schaltnetzteile erreicht wird. Ein Schaltregler oder Schaltnetzteil hat zudem den Vorteil, dass ihre Ausgangsspannung leicht variiert werden kann.

Zum Erzielen hoher Datenübertragungsgeschwindigkeiten muss die Senderversorgungsspannungsquelle 33 in der Lage sein, die notwendige dynamische Änderung der Senderversorgungsspannung U3 sehr schnell durchzuführen, was insbesondere bei höheren Sendeleistungen von beispielsweise mehr als einem Watt einen verhältnismäßig hohen Aufwand an schnellen, leistungsfähigen und teuren Bauteilen zur Folge hätte. Zur Vermeidung dieses hohen Aufwands ist es in der erfindungsgemäßen Ausführungsform vorgesehen, die Modulation des Sendesignals U5 über eine speziell dafür angepasste Treibervorrichtung 35 durchzuführen, die mit geringem schaltungstechnischem Aufwand und preiswerten Bauteilen realisiert werden kann.

Der Grad, um den der Endstufentransistor V1 durchgesteuert wird, ist abhängig von der Amplitude der Treiberausgangsspannung U4.

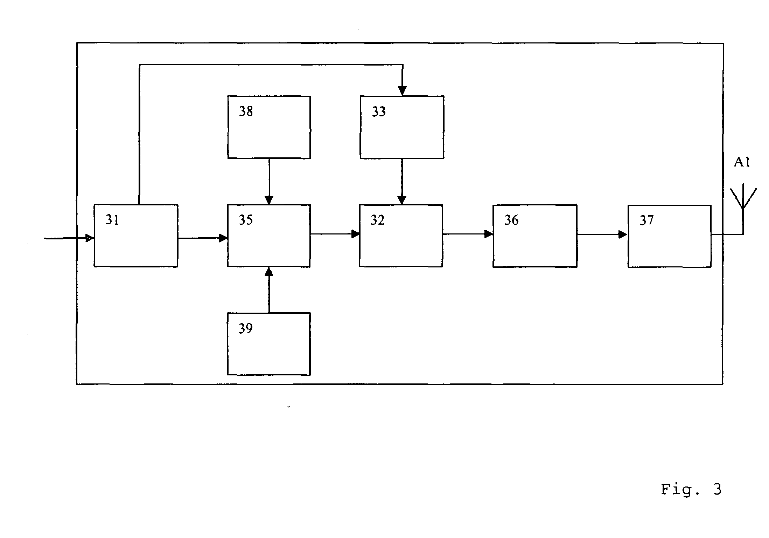

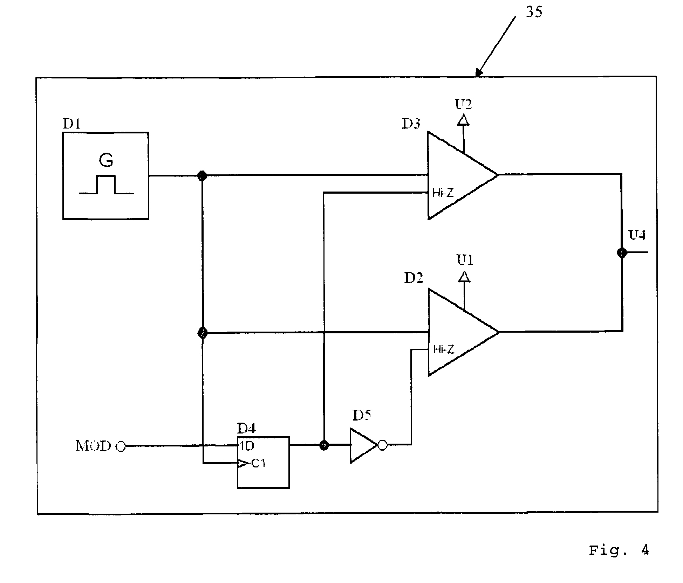

Fig. 3 zeigt ein Blockschaltbild der Ausführungsform der erfindungsgemäßen Sendevorrichtung. Im Unterschied zu der in Fig. 1 dargestellten Ausführungsform weist hierbei die Treibervorrichtung 35 einen geänderten Aufbau auf, der in Fig. 4 näher beschrieben wird. Ferner wird die Treibervorrichtung 35 von zwei separaten Gleichspannungsquellen 38 und 39 gespeist.

Diese Ausführungsform ist besonders vorteilhaft, weil der schaltungstechnische Aufwand gering ist und mit preiswerten und gängigen Bauteilen aufgebaut werden kann.

Fig. 4 stellt beispielhaft das Funktionsprinzip der Treibervorrichtung 35 dar. Bei dieser Ausführungsform werden zwei parallel geschaltete Treiber D2 und D3, die mit je einer eigenen Gleichspannung U1 (Treiberversorgungsspannung) und U2 (Modulatorversorgungsspannung) versorgt werden, abwechselnd betrieben. Der Betrag der Modulatorversorgungsspannung U2 ist hierbei kleiner gewählt als der Betrag der Treiberversorgungsspannung U1. Ferner kann der Betrag der Modulatorversorgungsspannung U2 zur Variation des Modulationsgrads des Sendesignals U5 stufenlos variiert werden.

Der Treiber D2 hat die Funktion, die Treiberausgangsspannung U4 für das unmodulierte Sendesignal U5 zu erzeugen, während über den Treiber D3, der von der variablen Modulatorversorgungsspannung U2 versorgt wird, in der Zeitspanne, in der das Sendesignal U5 ein moduliertes Signal sein soll, die Treiberausgangsspannung U4 erzeugt wird.

Damit die beiden parallel geschalteten Treiber D2 und D3 ihr Ausgangssignal abwechselnd und ohne Beeinflussung des jeweils anderen Treibers ausgeben können, kann ihr Ausgang neben den logischen Zuständen high und low auch einen hochohmigen Zustand annehmen, es handelt sich also um so genannte Tri-State-Ausgänge. Der Zeitpunkt und die Dauer des hochohmigen Zustands wird über den Eingang "Hi-Z" der Treiber D2 und D3 gesteuert.

Die in Fig. 4 dargestellte Schaltung besteht zudem aus einem D-Flip-Flop D4 (Gatter) und einem Inverter D5 und stellt beispielhaft eine mögliche Schaltungsvariante dar, die es ermöglicht, dass die Treiber D2 und D3 nur abwechselnd das Treiberausgangssignal U4 erzeugen.

Über den Eingang MOD werden der Treibervorrichtung 35 die zu modulierenden Daten in Form von logischen high- und low-Pegeln zugeführt.

Das D-Flip-Flop D4 hat die Funktion, den Zeitpunkt der Umschaltung zwischen den Treibern D2 und D3 derart zu synchronisieren, dass ein Wechsel zwischen den Treibern D2 und D3 nur in der low-Phase des Generatorsignals U6 erfolgt, um zu gewährleisten, dass die beiden Treiber D2 und D3 nicht gleichzeitig und damit gegeneinander die Treiberausgangsspannung U4 generieren.

Zum Senden des unmodulierten Trägersignals wird an dem Eingang MOD der Treibervorrichtung ein logischer high-Pegel angelegt, wodurch mit der steigenden Flanke vom Generatorsignal U6 der Q-Ausgang des D-Flip-Flops D4 ebenfalls einen high-Pegel annimmt, wodurch der Ausgang des Treibers D3 über seinen Eingang Hi-Z hochohmig geschaltet wird und kein Ausgangssignal ausgibt. Gleichzeitig liegt am Eingang Hi-Z des Treibers D2 ein low-Pegel an, weil das Ausgangssignal des D-Flip-Flops D4 über den Inverter D5 invertiert wurde, was zur Folge hat, dass der Treiber D2 das Generatorsignal U6 durchleitet und die Treiberausgangsspannung U4 erzeugt, wobei die Amplitude der Treiberausgangsspannung U4 über den Betrag der Treiberversorgungsspannung U1 bestimmt wird.

Die Treiberversorgungsspannung U1 ist hierbei so eingestellt, dass der Endstufentransistor V1 von einem logischen high-Pegel der vom Treiber D2 erzeugten Treiberausgangsspannung U4 vollständig durchgesteuert wird, er also im Schalterbetrieb arbeitet.

Wenn am Eingang MOD der Treibervorrichtung ein logischer low-Pegel anliegt, wechselt der Ausgang des D-Flip-Flops D4 mit der ersten steigenden Flanke des Generatorsignals U6 ebenfalls auf den logischen low-Pegel, wodurch der Ausgang des Treibers D3 aktiviert wird und der Treiber D3 das Generatorsignal U6 durchleitet und die Treiberausgangsspannung U4 erzeugt, wobei die Amplitude der Treiberausgangsspannung U4 über den Betrag der Modulatorversorgungsspannung U2 bestimmt wird. Gleichzeitig liegt am Eingang Hi-Z des Treibers D3 ein high-Pegel an, weil das Ausgangssignal des D-Flip-Flops D4 über den Inverter D5 invertiert wurde, was zur Folge hat, dass der Ausgang von Treiber D2 hochohmig geschaltet wird und kein Signal ausgibt.

Die Modulatorversorgungsspannung U2 ist so eingestellt, dass der Endstufentransistor V1 von einem logischen high-Pegel der vom Treiber D3 erzeugten Treiberausgangsspannung U4 nur teilweise durchgesteuert wird, wodurch sich ein geringeres Sendesignal U5 einstellt, solange am Eingang MOD ein logischer low-Pegel anliegt. Durch Variieren der Modulatorversorgungsspannung U2 kann der Grad, um den der Endstufentransistor V1 durchgesteuert wird, stufenlos variiert werden, womit eine stufenlose Variation des Modulationsgrades der Sendevorrichtung erzielt wird.

Der Vorteil der erfindungsgemäßen Ausführungsform ist, dass insbesondere die Treiberversorgungsspannung U1 sehr gut stabilisiert und gesiebt werden kann und damit sehr rauscharm und brummarm ist, womit keine störenden Rauscheinflüsse über den Endstufentransistor V1 verstärkt und in den nicht dargestellten Empfänger der Schreib-/Lesestation einwirken können. Ferner ist der schaltungstechnische Aufwand zur Erzeugung von zwei unterschiedlich hohen Gleichspannungen gering, und es werden nur die sehr preiswerten Standardbauteile D-Flip-Flop D4, Inverter D5 und Treiber D2 und D3 benötigt.

Damit durch das Umschalten zwischen den Treibern D2 und D3 kein umschaltbedingtes Überschwingen des Sendesignals U5 hervorgerufen wird, ist es in einer weiteren vorteilhaften Ausführungsform vorgesehen, die Modulatorversorgungsspannung U2 nach der Umschaltung vom Treiber D3 auf Treiber D2 sanft von einem Betrag im Bereich der Treiberversorgungsspannung U1 auf den Endbetrag der Modulatorversorgungsspannung U2 abfallen zu lassen beziehungsweise vor dem Umschalten von dem Treiber D2 auf den Treiber D3 die Modulatorversorgungsspannung sanft auf einen Betrag im Bereich der Treiberversorgungsspannung U1 anzuheben.

In einer weiteren Ausführungsform (nicht dargestellt) ist der Frequenzgenerator D1 und die Vorrichtung zum Erzeugen des Signals MOD Bestandteil eines komplexen integrierten elektronischen Schaltkreises (IC), wie beispielsweise eines Mikroprozessors oder einer programmierbaren Logikschaltung, womit auf die externen Bauteile D-Flip-Flop D4 und Inverter D5 verzichtet werden kann, da die Festlegung des Umschaltzeitpunkts zwischen dem Treiber D2 und D3 direkt innerhalb des ICs erfolgt (nicht dargestellt).

Auch die zusätzliche Integration der Treiber D2 und D3 in den IC ist in einer weiteren erfindungsgemäßen Ausführungsform vorgesehen (nicht dargestellt).

In einer weiteren besonders vorteilhaften Ausführungsform ist zusätzlich die Integration des Endstufentransistors V1 in den IC vorgesehen (nicht dargestellt).

### Bezugszeichen

- A1: Antenne
- C1: Kapazität
- C2: Kapazität
- D1: Frequenzgenerator
- D2: Treiber für Träger
- D3: Treiber für Modulation
- D4: D-Flip-Flop
- D5: Inverter
- Hi-Z: Eingang des Treibers D2 und Eingang des Treibers D3
- L1: Induktivität
- L2: Induktivität
- MOD: Eingang
- U1: Treiberversorgungsspannung
- U2: Modulatorversorgungsspannung
- U3: Senderversorgungsspannung
- U4: Treiberausgangsspannung
- U5: Sendesignal
- U6: Generatorsignal
- V1: Endstufentransistor
- 31: Steuervorrichtung
- 32: Sendeendstufe
- 33: Senderversorgungsspannungsquelle
- 34: Treiberversorgungsspannungsquelle
- 35: Treibervorrichtung
- 36: Impedanztransformator
- 37: Tiefpassfilter
- 38: Gleichspannungsquelle
- 39: Gleichspannungsquelle

## Patentansprüche

1. Rauscharme Sendevorrichtung mit hohem Wirkungsgrad und variablem Modulationsgrad für eine Schreib-/Lesestation eines RFID-Systems bestehend aus einer Sendeendstufe, die als E-Endstufe aufgebaut ist, und einer Ansteuervorrichtung der Sendeendstufe,
**dadurch gekennzeichnet, dass**
- eine Modulation des Sendesignals (U5) durch Modulieren einer Treiberausgangsspannung (U4) durchführbar ist,
- eine Treibervorrichtung (35) als eine von zwei separaten Gleichspannungsquellen (38, 39) gespeiste Treibervorrichtung (35) ausgebildet ist,
- die Treibervorrichtung (35) zwei parallel geschaltete, abwechselnd betriebene Treiber (D2, D3) aufweist, die mit je einer eigenen Gleichspannung (U1 (Treiberversorgungsspannung)) und (U2 (Modulatorversorgungsspannung)) versorgbar sind,
- die Modulation der Treiberausgangsspannung (U4) durch Umschaltung zwischen der Treiberversorgungsspannung (U1) und einer Modulationsversorgungsspannung (U2) durchführbar ist, und
- der Treiber (D2) als ein die Treiberausgangsspannung (U4) für das unmodulierte Sendesignal (U5) erzeugender Treiber (D2) ausgebildet ist, während der Treiber (D3) als ein die Treiberausgangsspannung (U4) erzeugender Treiber (D3) ausgebildet ist, wobei der Treiber (D3) als ein von der variablen Modulationsversorgungsspannung (U2) versorgter Treiber ausgebildet ist, und dass der Treiber (D3) in der Zeitspanne, in der das Sendesignal (U5) ein moduliertes Signal ist, als ein die Treiberausgangsspannung (U4) erzeugender Treiber (D3) ausgebildet ist.

2. Sendevorrichtung nach Anspruch 1, **dadurch gekennzeichnet, dass** der Modulationsgrad durch Variieren der Modulationsversorgungsspannung (U2) variierbar ist.

3. Sendevorrichtung nach Anspruch 1, **dadurch gekennzeichnet, dass** die Treibervorrichtung (35) eine Vorrichtung aufweist zur Sicherstellung, dass eine Umschaltung zwischen einer Treiberversorgungsspannung (U1) und einer Modulationsversorgungsspannung (U2) lediglich zu einem Zeitpunkt erfolgt, zu dem ein Generatorsignal (U6) einen low-Pegel generiert.

4. Sendevorrichtung nach einem der vorhergehenden Ansprüche, **dadurch gekennzeichnet, dass** die Senderversorgungsspannung (U3) von einem Schaltnetzteil oder mittels eines Schaltreglers erzeugbar ist.

5. Sendevorrichtung nach einem der vorhergehenden Ansprüche, **dadurch gekennzeichnet, dass** ein Frequenzgenerator (D1) und eine Vorrichtung zum Erzeugen eines Signals (MOD) Bestandteil eines komplexen integrierten elektronischen Schaltkreises (IC) sind.

6. Sendevorrichtung nach einem der vorhergehenden Ansprüche, **dadurch gekennzeichnet, dass** die Treiber (D2, D3) in den komplexen integrierten elektronischen Schaltkreis (IC) integriert sind.

7. Sendevorrichtung nach einem der vorhergehenden Ansprüche, **dadurch gekennzeichnet, dass** ein Endstufentransistor (V1) in den komplexen integrierten elektronischen Schaltkreis (IC) integriert ist.

## Claims

1. Low-noise transmitting device with high efficiency and variable modulation factor for a write/read station of an RFID system comprising a transmitting output stage, which is constructed as a class E power amplifier, and a control device of the transmitting output stage,
**characterised in that**
- a modulation of the transmission signal (U5) can be carried out by modulating a driver output voltage (U4),
- a driver device (35) is formed as a driver device (35) fed by one of two separate direct voltage sources (38, 39),
- the driver device (35) comprises two alternately operated drivers (D2, D3) connected in parallel, each of which can be supplied with its own direct voltage (U1 (driver supply voltage)) and (U2 (modulator supply voltage)),
- the modulation of the driver output voltage (U4) can be carried out by switching between the driver supply voltage (U1) and a modulation supply voltage (U2), and
- the driver (D2) is formed as a driver (D2) generating the driver output voltage (U4) for the unmodulated transmission signal (U5), while the driver (D3) is formed as a driver (D3) generating the driver output voltage (U4), the driver (D3) being formed as a driver supplied by the variable modulation supply voltage (U2), and **in that** the driver (D3), in the time period in which the transmission signal (U5) is a modulated signal, is formed as a driver (D3) generating the driver output voltage (U4).

2. Transmitting device according to Claim 1, **characterised in that** the modulation factor is variable by varying the modulation supply voltage (U2).

3. Transmitting device according to Claim 1, **characterised in that** the driver device (35) comprises a device for ensuring that a switching between a driver supply voltage (U1) and a modulation supply voltage (U2) takes place only at an instant at which a generator signal (U6) generates a low level.

4. Transmitting device according to one of the preceding claims, **characterised in that** the transmitter supply voltage (U3) can be generated by a switching power supply or by means of a switching regulator.

5. Transmitting device according to one of the preceding claims, **characterised in that** a frequency generator (D1) and a device for generating a signal (MOD) are components of a complex integrated electronic circuit (IC).

6. Transmitting device according to one of the preceding claims, **characterised in that** the drivers (D2, D3) are integrated in the complex integrated electronic circuit (IC).

7. Transmitting device according to any one of the preceding claims, **characterised in that** an output transistor (V1) is integrated in the complex integrated electronic circuit (IC).

## Revendications

1. Dispositif émetteur à faible bruit avec un haut rendement et un degré de modulation variable pour une station d'écriture/lecture d'un système RFID constitué d'un étage émetteur final qui est conçu comme un étage final E et un dispositif de pilotage de l'étage émetteur final,
**caractérisé en ce que** :
- une modulation du signal émis (U5) peut être réalisée par modulation d'une tension de sortie de pilote (U4),
- un dispositif de pilotage (35) est conçu comme un dispositif de pilotage (35) alimenté par deux sources de tension continue (38, 39) séparées,
- le dispositif d'attaque (35) comprend deux pilotes (D2, D3) fonctionnant en alternance et branchés en parallèle, qui peuvent être alimentés chacun avec sa propre tension continue (U1 (tension d'alimentation du pilote)) et (U2 (tension d'alimentation du modulateur)),
- la modulation de la tension de sortie du pilote (U4) peut être réalisée en commutant entre la tension d'alimentation du pilote (U1) et une tension d'alimentation de modulation (U2), et
- le pilote (D2) est conçu comme un pilote (D2) générant la tension de sortie de pilote (U4) pour le signal émis (U5) non modulé, tandis que le pilote (D3) est conçu comme un pilote (D3) générant une tension de sortie de pilote (U4), le pilote (D3) étant conçu comme un pilote alimenté par la tension d'alimentation de modulation variable (U2), et **en ce que** 1c pilote (D3) est conçu comme un pilote (D3) générant la tension de sortie de pilote (U4) pendant la période au cours de laquelle le signal émis (U5) est un signal modulé.

2. Dispositif émetteur selon la revendication 1, **caractérisé en ce que** le degré de modulation peut être modifié en faisant varier la tension d'alimentation de modulation (U2).

3. Dispositif émetteur selon la revendication 1, **caractérisé en ce que** le dispositif de pilotage (35) comprend un dispositif permettant de garantir qu'une commutation entre une tension d'alimentation de pilote (U1) et une tension d'alimentation de modulation (U2) ait lieu uniquement à un moment auquel un signal de générateur (U6) génère un niveau bas.

4. Dispositif émetteur selon l'une des revendications précédentes, **caractérisé en ce que** la tension d'alimentation de l'émetteur (U3) peut être générée par un bloc d'alimentation à découpage ou à l'aide d'un régulateur de commutation.

5. Dispositif émetteur selon l'une des revendications précédentes, **caractérisé en ce qu'**un générateur de fréquence (D1) et un dispositif générateur de signaux (MOD) font partie d'un circuit électronique intégré complexe (IC).

6. Dispositif émetteur selon l'une des revendications précédentes, **caractérisé en ce que** les pilotes (D2, D3) sont intégrés dans le circuit électronique intégré complexe (IC).

7. Dispositif émetteur selon l'une des revendications précédentes, **caractérisé en ce qu'**un transistor d'étage final (V1) est intégré dans le circuit électronique intégré complexe (IC).
